# EUROPEAN PATENT SPECIFICATION

(11) **EP 2 223 563 B1**
(45) Date of publication and mention of the grant of the patent: **07.12.2016**
(21) Application number: 08862956.3
(22) Date of filing: 15.12.2008
(51) Int. Cl.: H04W 72/04

(54) **RANGING PROCEDURE IDENTIFICATION OF ENHANCED WIRELESS TERMINAL**
SORTIERVERFAHRENSIDENTIFIKATION AUF EINEM ERWEITERTEN DRAHTLOSEN ENDGERÄT
IDENTIFICATION DE PROCÉDURE DE MESURE DE DISTANCE D'UN TERMINAL SANS FIL AMÉLIORÉ

(30) Priority: 17.12.2007 US 14245; 11.12.2008 US 333147
(43) Date of publication of application: 01.09.2010
(73) Proprietor: Telefonaktiebolaget LM Ericsson (publ), 164 83 Stockholm (SE)
(72) Inventor: RAMESH, Rajaram, Raleigh North Carolina 27606 (US); KOORAPATY, Havish, Cary North Carolina 27513 (US); BALACHANDRAN, Kumar, Cary North Carolina 27518 (US)
(74) Representative: Ericsson
(86) International application number: PCT/SE2008/051451
(87) International publication number: WO 2009/078795

(56) References cited:
- WO-A1-00/54536
- GB-A- 2 368 496
- GB-A- 2 418 806
- KISEON RYU ET AL.: 'Section 5 - IEEE 802.16m Requirements on legacy support', [Online] 23 February 2007, pages 1 - 3, XP003025132 Retrieved from the Internet: <URL:http://wirelessman.org/tgm/contrib/C80 216m-07_037.pdf> [retrieved on 2009-05-14]
- SUNGCHEOL CHANG ET AL.: 'CDMA Code Partitioning for R-UL Ranging Control', [Online] 08 January 2007, pages 1 - 8, XP003025133 Retrieved from the Internet: <URL:http://wirelessman.org/relay/contrib/C 80216j-07_128.pdf> [retrieved on 2009-05-13]
- HYUNG JOON JEON ET AL.: 'Dedicated Ranging Opportunity for RS', [Online] 05 March 2007, pages 1 - 6, XP003025134 Retrieved from the Internet: <URL:www.ieee802.org/16/relay/contrib/C8021 6j-07_175.pdf> [retrieved on 2009-05-04]

## Description

### BACKGROUND

This invention pertains to telecommunications, and particular to an initial ranging procedure involved in wireless telecommunications.

In a typical cellular radio system, wireless terminals (also known as mobile terminals, mobile stations, and mobile user equipment units (UEs)) communicate via base stations of a radio access network (RAN) to one or more core networks. The wireless terminals (WT) can be mobile stations such as mobile telephones ("cellular" telephones) and laptops with mobile termination, and thus can be, for example, portable, pocket, hand-held, computer-included, or car-mounted mobile devices which communicate voice and/or data with radio access network. The base station, e.g., a radio base station (RBS), is in some networks also called "NodeB" or "B node". The base stations communicate over the air interface (e.g., radio frequencies) with the wireless terminals which are within range of the base stations.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UTRAN is essentially a radio access network providing wideband code division multiple access for user equipment units (UEs). The radio access network in a UMTS network covers a geographical area which is divided into cells, each cell being served by a base station. Base stations may be connected to other elements in a UMTS type network such as a radio network controller (RNC). The Third Generation Partnership Project (3GPP or "3G") has undertaken to evolve further the predecessor technologies, e.g., GSM-based and/or second generation ("2G") radio access network technologies. In GB 2 418 806, there is described cellular mobile communication supporting mobile phones with different capabilities regarding duplex/half-duplex communication. GB 2 368 496 discusses measuring the amount of time elapsed between two registrations of one user equipment at one base station using different radio access networks/technologies (RAN/RAT) to determine whether the user equipment is capable of accessing or using the RANs/RATs simultaneously or not.

The IEEE 802.16 Working Group on Broadband Wireless Access Standards develops formal specifications for the global deployment of broadband Wireless Metropolitan Area Networks. Although the 802.16 family of standards is officially called WirelessMAN, it has been dubbed WiMAX" (from "Worldwide Interoperability for Microwave Access") by an industry group called the WiMAX Forum.

IEEE 802.16e-2005 (formerly known as IEEE 802.16e) is in the lineage of the specification family and addresses mobility by implementing, e.g., a number of enhancements including better support for Quality of Service and the use of Scalable OFDMA. In general, the 802.16 standards essentially standardize two aspects of the air interface - the physical layer (PHY) and the Media Access Control layer (MAC).

Concerning the physical layer, IEEE 802.16e uses scalable OFDMA to carry data, supporting channel bandwidths of between 1.25 MHz and 20 MHz, with up to 2048 sub-carriers. IEEE 802.16e supports adaptive modulation and coding, so that in conditions of good signal, a highly efficient 64 QAM coding scheme is used, whereas where the signal is poorer, a more robust BPSK coding mechanism is used. In intermediate conditions, 16 QAM and QPSK can also be employed. Other physical layer features include support for Multiple-in Multiple-out (MIMO) antennas in order to provide good performance in NLOS (Non-line-of-sight) environments and Hybrid automatic repeat request (HARQ) for good error correction performance.

In terms of Media Access Control layer (MAC), the IEEE 802.16e encompasses a number of convergence sublayers which describe how wireline technologies such as Ethernet, ATM and IP are encapsulated on the air interface, and how data is classified, etc. It also describes how secure communications are delivered, by using secure key exchange during authentication, and encryption during data transfer. Further features of the MAC layer include power saving mechanisms (using Sleep Mode and Idle Mode) and handover mechanisms.

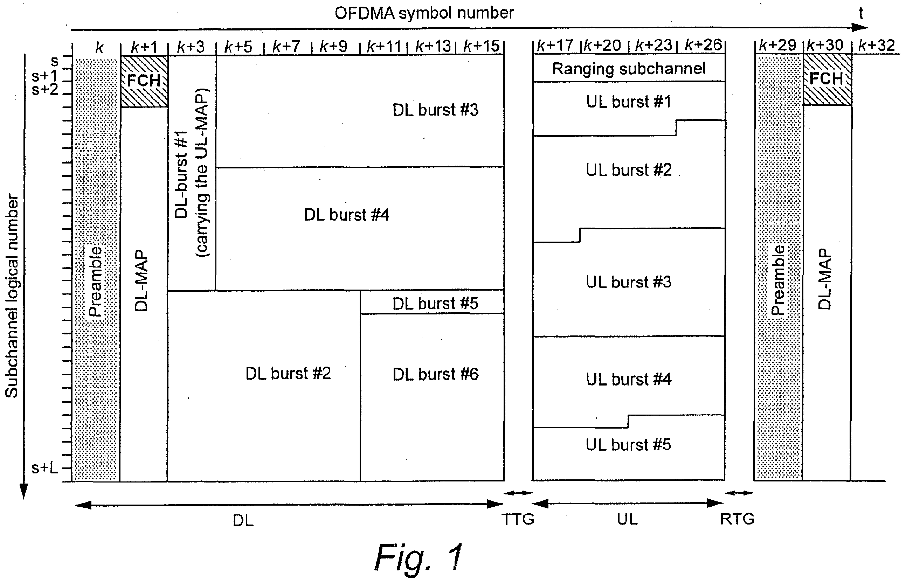

The frame structure for IEEE standard 802.16e is shown in Fig. 1. The frame length for IEEE standard 802.16e is 5 ms in one example mode, and uses time division duplex (TDD). The preamble is used by mobile stations to synchronize to the downlink (DL), and the DL-MAP and UL-MAP messages that occur just following the preamble give allocation information to the mobile stations on the downlink and the uplink. Examples of downlink and uplink allocations are shown in Fig. 1. The transmit transition gap (TTG) and the receive transition gap (RTG) are gaps used for the mobile station to switch from receive to transmit and vice versa.

As mentioned above, presently WiMAX utilizes orthogonal frequency division multiple access (OFDMA). Like OFDM, OFDMA transmits a data stream by dividing the data stream over several narrow band sub-carriers (e.g. 512, 1024 or even more depending on the overall available bandwidth [e.g., 5, 10, 20 MHz] of the channel) which are transmitted simultaneously. The sub-carriers are divided into groups of sub-carriers, each group also being referred to as a sub-channel. The sub-carriers that form a sub-channel need not be adjacent. As many bits are transported in parallel, the transmission speed on each sub carrier can be much lower than the overall resulting data rate. This is important in a practical radio environment in order to minimize effect of multipath fading created by slightly different arrival times of the signal from different directions.

The IEEE standard 802.16m is intended to be an evolution of IEEE standard 802.16e with the aim of higher data rates and lower latency. A frame structure for the IEEE standard 802.16m is provided in United States Patent Application US2009 092085 entitled "TELECOMMUNIATIONS FRAME STRUCTURE ACCOMMODATING DIFFERING FORMATS", filed June 12, 2008. There is a requirement for backward compatibility between IEEE standard 802.16m and its IEEE standard 802.16e predecessor. An enhancement of the standard which introduces a novel modulation scheme, while at the same time addressing issues of backward compatibility, are described in United States Provisional Patent Application 12/259,068, entitled "BACKWARDS COMPATIBLE IMPLEMENTATIONS OF SC-FDMA UPLINK IN WiMAX", filed October 27, 2008.

Several ranging modes are performed in WiMAX, e.g., initial ranging, handover, periodic ranging, and bandwidth contention. Important operations such as power adjustment, timing offset estimation, and synchronization between a base station and a wireless terminal are accomplished in the WiMAX initial ranging mode, also referred to herein as the initial ranging procedure.

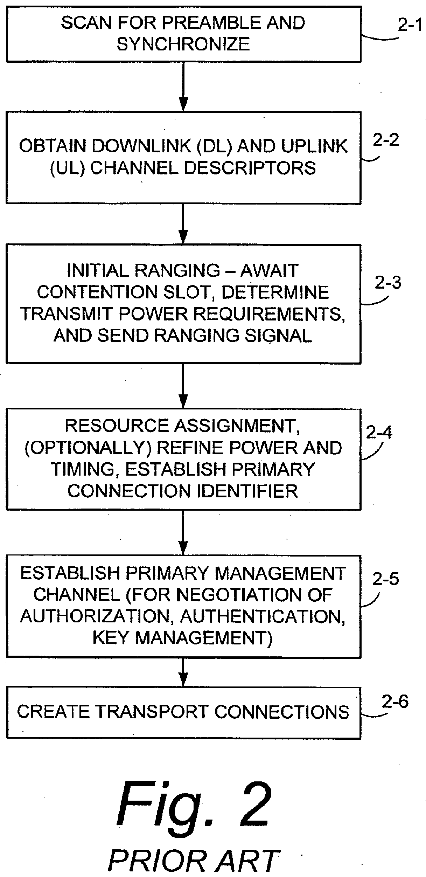

The initial ranging procedure or initial entry of a WiMAX-enabled wireless terminal involves a sequence of transaction phases with a base station, which are generally illustrated in Fig. 2. See, e.g., Kim, Hyung-Joon, IEEE 802.16/WiMAX Security, http://www.ibluemojo.com/contents/IEEE%20802.16%20Security. pdf; and Boone, Paul et al., "Strategies for Fast Scanning and Handovers in WiMAX/802.16", WiMAX OFDMA Ranging, Altera Corporation, Application Note 430, August 2006, version 1.0.

The initial ranging procedure begins by the wireless terminal scanning for downlink signals from the base station. The wireless terminal scans by listening to each possible frequency until the wireless terminal hears the frame preamble. After finding a channel, the wireless terminal can use the preamble to synchronize with the base station. The wireless terminal can then read a downlink map (DL-MAP), which is a map of the timeslot locations in use for the frame. Thus, as shown in Fig. 2, phase 2-1 of the initial ranging procedure comprises scanning and synchronization.

Once the wireless terminal has synchronized with the channel, as phase 2-2 the wireless terminal must then scan (e.g., listen) for the Downlink and Uplink Channel Descriptors that are periodically sent using the broadcast by the base station.

As phase 2-3, the wireless terminal must wait for a contention slot in order to perform initial ranging with the base station. In the initial ranging procedure, the wireless terminal sends a ranging signal to the base station. The wireless terminal uses initial estimates of power and timing in sending this ranging signal, and such estimates may be derived from the signal sent by the base station on the downlink.

In Phase 4, the base station responds to this ranging signal by sending a message with a resource assignment, and possibly adjustments to power and timing. Thus, the initial ranging can be used to refine the transmit power and transmit timing of the wireless terminal (PHY parameters). In the course of this initial response, a primary connection identifier between the base station and the wireless terminal is established or assigned.

In phase 2- 5, in response to the above assignment, the wireless terminal transmits control signals to the base station, thereby establishing a primary management channel used for negotiation of such issues as security algorithms (e.g., authorization, authentication, and key management method to be used). In phase 2-5 the base station obtains a public-key-based certificate from the wireless terminal to authenticate the wireless terminal. Upon successful authentication with the base station, the wireless terminal is now authorized to the base station and other keys for secure communication are established during authorization.

Phase 2-6 comprises using further exchange of messages in which, e.g., a secondary management connection and transport connections for data transmissions are established.

The ranging operations are conducted using code division multiple access (CDMA) codes. Typically sets of these CDMA codes are identified for the different ones of the ranging modes described above. More specifically, a number of CDMA codes are allocated to each of the ranging modes (e.g., initial ranging, handover, periodic ranging, and bandwidth contention). A wireless terminal can randomly select and transmit any of these ranging codes during a ranging channel.

Thus, in the initial ranging procedure, a new wireless terminal (e.g., a new subscriber station (SS)) chooses at random one of the codes of the set available for initial ranging and transmits using the chosen code to the base station. The initial ranging signal, comprising the CDMA code, is sent by the SS in Phase 2-3. Typically the initial transmission from the wireless terminal is in a specified ranging channel, on a randomly selected ranging slot. The base station does not know the identity of the new wireless terminal (e.g., of the new subscriber station), nor its capabilities, but receives the CDMA code signal. In response to the CDMA code signal received during the initial ranging procedure, as an acknowledgment the base station sends to the wireless terminal an allocation which includes the received CDMA code and the time that the CDMA code signal was received by the base station from the wireless terminal, as in Phase 2-4. This response helps the new wireless terminal identify the allocation, so that the new wireless terminal can exchange further information with the base station by sending information on the allocation identified by the base station. It is to be appreciated that the terminal will use transmit signals that are limited by its capability.

Some wireless terminals operating in the WiMAX system may be older terminals (e.g., "legacy" terminals) which, although compatible with upgraded or subsequent versions of WiMAX, are not able to take advantage of enhanced capabilities proffered by WiMAX. For example, in view of the compatibility of WiMAX IEEE standard 802.16m back to IEEE standard 802.16e, a 802.16e-version wireless terminal can operate in a 802.16m network, but (unlike a 802.16e-version or "enhanced" wireless terminal) cannot take full advantages of the enhanced capabilities of the 802.16m network. With the advent of 802.16m, the 802.16m-version wireless terminals are expected to have significantly more capabilities than legacy wireless terminals. For example, they may be able to receive more complex MIMO signals, be capable of receiving a different modulation, or be capable of receiving the downlink (DL) signal in a portion of the time-frequency grid where legacy wireless terminals, cannot receive the signal. They may also be able to transmit in a different portion of the time frequency grid, and use a more efficient transmit signal. If the base station does not know that the terminal is capable of these advanced capabilities, it has to allocate resources to the terminal only assuming legacy capabilities for the terminal.

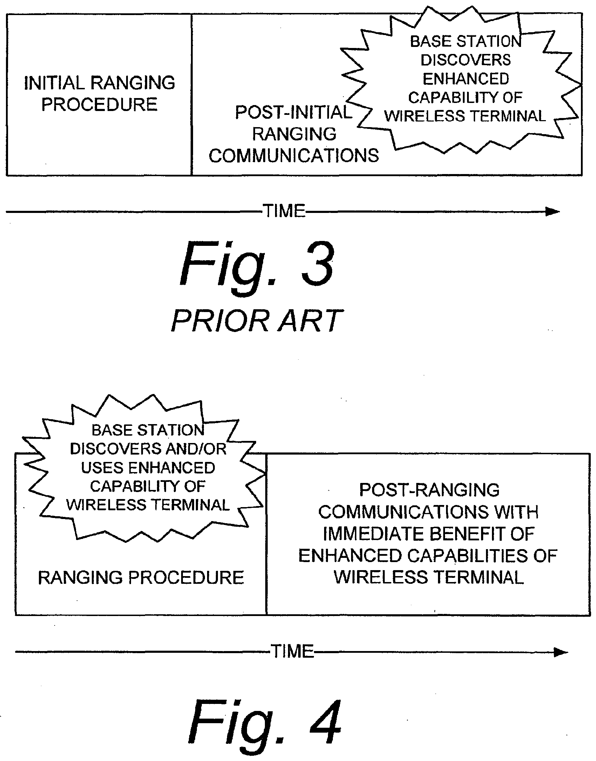

In conventional practice as illustrated in Fig. 3, the base station does not discover whether a particular wireless terminal is a legacy wireless terminal or enhanced wireless terminal until after completion of the initial ranging procedure. That is, only at a point in time subsequent to completion of the initial ranging procedure can the base station ascertain that the wireless terminal with which it communicates is a capability-enhanced wireless terminal, and only thereafter can the enhanced capabilities of the wireless terminal be advantageously employed.

Ranging is also used in the WiMAX system for the purposes of bandwidth request. When a wireless terminal has data to send, it sends a bandwidth request ranging signal to the base station using a randomly selected CDMA code from a set of CDMA codes allocated by the base station for the purposes of BW request ranging. This signal is also sent in a specific portion of the time-frequency grid that has been identified for bandwidth request ranging purposes. In response to receiving such a code, the base station sends an allocation signal to the terminal, identifying it just by the CDMA code received and time-frequency position of the request. The wireless terminal may use this allocation to send data or send a further request with more information on the data it needs to send. The wireless terminal is limited in its transmission by its capabilities. If the base station is not able to detect that the terminal has advanced transmit capabilities, it can only assign resources assuming legacy capabilities for the terminal.

### SUMMARY

In one of its aspects the technology disclosed herein concerns a method of operating a communications network comprising a base station and a wireless terminal which communicates over an air interface with the base station. The method comprises the base station making an identification or categorization of the wireless terminal during a ranging procedure. The identification or categorization concerns whether or not the wireless terminal has an enhanced capability. The categorization is made on a basis of a transmission characteristic of the wireless terminal. The base station can then communicate with the wireless terminal in a manner to utilize the enhanced capability of the wireless terminal.

The ranging procedure can be one of more of an initial ranging procedure, a handover procedure, a periodic ranging procedure, and a bandwidth request procedure.

The technology disclosed herein facilitates early use of the enhanced capability of the wireless terminal. For example, when the enhanced capability of the wireless terminal is detected in the ranging procedure, the base station can utilize the enhanced capability of the wireless terminal for further communication to the wireless terminal during the ranging procedure. Such further communication can include, for example, downloading of parameters to the wireless terminal during the ranging procedure. The base station may also allocate resources for transmission by the wireless terminal, taking advanced capabilities of the wireless terminal into account.

In one example mode, a set of codewords are allocated for use during the ranging procedure. The transmission characteristic comprises a codeword utilized by the wireless terminal being a member of a subset of the set of codewords, the subset being reserved for use during the ranging procedure by wireless terminals with the enhanced capability. Such a subset may be identified by the base station in the broadcast messages.

In another example mode, the transmission characteristic comprises utilization of a specified portion of a time-frequency grid reserved for use during the initial ranging procedure by the wireless terminal with the enhanced capability.

In a variation of the foregoing example mode, the base station allocates a specified portion of the time-frequency grid as being usable during the ranging procedure by the wireless terminal with the enhanced capability. The transmission characteristic comprises utilization of the specified portion of the time-frequency grid by the wireless terminal with the enhanced capability. For example, the base station can broadcast an indication of the specified portion of a time-frequency grid which is usable by the wireless terminal with the enhanced capability for the ranging procedure.

In another of its aspects, the technology disclosed herein concerns a base station, e.g., a base station node, of a telecommunications network. The base station comprises a transceiver configured to communicate over an air interface with a wireless terminal; and a ranging unit. The ranging unit is configured to make a categorization of the wireless terminal during a ranging procedure. The categorization concerns whether or not the wireless terminal has an enhanced capability. The categorization is made on a basis of a transmission characteristic of the wireless terminal.

In one example embodiment, the base station comprises a resource allocator configured to allocate a set of codewords for use during the ranging procedure. The transmission characteristic comprises a codeword utilized by the wireless terminal being a member of a subset of the set of codewords. The subset is reserved by the resource allocator for use during the ranging procedure by wireless terminals with the enhanced capability.

In another example embodiment, the transmission characteristic comprises utilization of a specified portion of a time-frequency grid reserved for use during the ranging procedure by the wireless terminal with the enhanced capability.

In a variation of the foregoing example embodiment, the base station comprises a resource allocator configured to allocate a specified portion of the time-frequency grid as being usable during the ranging procedure by the wireless terminal with the enhanced capability. The transmission characteristic comprises utilization of the specified portion of the time-frequency grid by the wireless terminal with the enhanced capability.

In another of its aspects, the technology disclosed herein concerns a wireless terminal which comprises a transceiver and a a terminal ranging unit. The transceiver is configured to communicate over an air interface with a base station. The terminal ranging unit is configured to utilize a reserved transmission characteristic for use in a ranging procedure involving the base station, the reserved transmission characteristic being a transmission resource which would be recognized by the base station as indicating that the wireless terminal has an enhanced capability.

In an example embodiment, the enhanced capability permits the wireless terminal with the enhanced capability to use a 802.16m-specific signal and/or procedure.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a diagrammatic view of frame structure for IEEE standard 802.16e.
Fig. 2 is a diagrammatic view of an example sequence of example phases of an initial ranging procedure.
Fig. 3 is diagrammatic view showing conventional practice of a base station discovering enhanced capabilities of a wireless terminal subsequent to completion of an initial ranging procedure.
Fig. 4 is diagrammatic view showing an aspect of the technology disclosed herein wherein a base station discovers enhanced capabilities of a wireless terminal prior to completion of an initial ranging procedure.
Fig. 5 is a schematic view of an example generic communications network which facilitates early identification of enhanced capabilities of a wireless terminal during a ranging procedure.
Fig. 6 is a flowchart showing example, representative, non-limiting acts or steps performed in conjunction with a method of the technology disclosed herein.
Fig. 7 is a diagrammatic view showing examples of various example implementations of transmission characteristics that can be utilized in conjunction with the method of Fig. 6.
Fig. 8 is a schematic view of an example base station configured for early identification of enhanced capabilities of a wireless terminal during a ranging procedure.
Fig. 9 is a schematic view of an example wireless terminal configured to be identified as an enhanced capability terminal during a ranging procedure.
Fig. 10 is a schematic view of an example base station configured for early identification of enhanced capabilities of a wireless terminal by detecting use of a reserved codeword during a ranging procedure.
Fig. 11 is a schematic view of an example wireless terminal configured to be identified as an enhanced capability terminal on the basis of use of a reserved codeword during a ranging procedure.
Fig. 12 is a schematic view of an example base station configured for early identification of enhanced capabilities of a wireless terminal by detecting use of a reserved portion of a time-frequency grid during a ranging procedure.
Fig. 13 is a schematic view of an example wireless terminal configured to be identified as an enhanced capability terminal on the basis of use of a reserved portion of a time-frequency grid during a ranging procedure.
Fig. 14 is a diagrammatic view of an example time-frequency grid.
Fig. 16 is a diagrammatic view of enhanced frame structure for an example frame as communicated between a base station and a wireless terminal as perceived by an enhanced capability wireless terminal.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various elements including functional blocks labeled or described as "processors" or "controllers" may be provided through the use of dedicated hardware as well as hardware capable of executing software in association with appropriate software. When provided by a processor, the functions may be provided by a single dedicated processor, by a single shared processor, or by a plurality of individual processors, some of which may be shared or distributed. Moreover, explicit use of the term "processor" or "controller" should not be construed to refer exclusively to hardware capable of executing software, and may include, without limitation, digital signal processor (DSP) hardware, read only memory (ROM) for storing software, random access memory (RAM), and non-volatile storage.

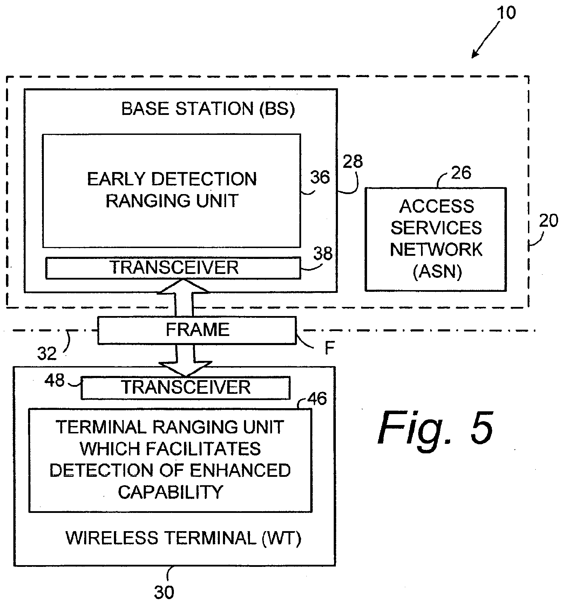

The technology described herein is advantageously illustrated in the example, non-limiting, context of a telecommunications system 10 such as that schematically depicted in Fig. 5. As explained hereinafter, telecommunications system 10 of Fig. 5 facilitates early identification of enhanced capabilities of a wireless terminal during a ranging procedure. The ranging procedure can be one of more of an initial ranging procedure, a handover procedure, a periodic ranging procedure, and a bandwidth contention procedure.

The example telecommunications system 10 of Fig. 5 shows radio access network 20 which can be connected to one or more external (e.g., core) networks. The external networks may comprise, for example, connection-oriented networks such as the Public Switched Telephone Network (PSTN) and/or the Integrated Services Digital Network (ISDN), and/or connectionless external core network such as (for example) the Internet. One or more of the external networks have unillustrated serving nodes such as, e.g., a Mobile Switching Center (MSC) node and a Serving General Packet Radio Service (GPRS) Support node (SGSN) working in conjunction with a Gateway GRPS Support Node (GGSN).

The radio access network (RAN) 20 can, at least in some embodiments, include access services network (ASN) 26 and one or more radio base station nodes 28. For sake of simplicity, the radio access network (RAN) 20 of Fig. 5 is shown as comprising one base station node 28. Those skilled in the art will also appreciate that a base station is sometimes also referred to in the art as a radio base station, a node B, eNodeB 28, or B-node (all of which are used interchangeably herein).

Wireless terminals (WT) 30 can communicate with one or more cells or one or more base stations (BS) 28 over radio or air interface 32. In differing implementations, the wireless terminal (WT) 30 can be known by different names, such as mobile terminal, mobile station or MS, user equipment unit (UE), handset, or remote unit, for example. Each wireless terminal (WT) may be any of myriad devices or appliances, such as mobile phones, mobile laptops, pagers, personal digital assistants or other comparable mobile devices, SIP phones, stationary computers and laptops equipped with a real-time application, such as Microsoft netmeeting, Push-to-talk client etc.

As shown in Fig. 5, in an example embodiment base station 28 comprises base station ranging unit 36 and transceiver 38. For reasons explained herein, base station ranging unit 36 is also known as a base station ranging unit having early detection/identification of enhanced capability terminal. Transceiver 38 is involved in communicating frame(s) of information (illustrated as frames F in Fig. 5) over an air interface with a wireless terminal participating in a connection with the base station. The transceiver 38 includes both a transmitter(s) for transmitting downlink (DL) portions or bursts of frames, as well as a receiver(s) for receiving uplink (UL) portions or bursts of frames. As used herein, "transceiver" can include one or more transceivers and further encompasses radio transmission and/or reception equipment suitable for transmitting/receiving a data stream or the like in the form of plural sub-carriers or subchannels (such as in OFDMA and SC-FDMA, for non-limiting examples), including plural antennas when appropriate.

Fig. 5 further shows an example implementation of wireless terminals (WT) 30 which can, after completion of an initial ranging procedure, participate in a connection with base station 28. Wireless terminal (WT) 30 comprises wireless terminal ranging unit 46 and transceiver 48. Transceiver 48 is configured for communicating frames F over air interface 32 with base station 28, and comprises a receiver for receiving downlink (DL) bursts of the frames from base station 28 and a transmitter for transmitting uplink (UL) bursts of the frames to base station 28.

At certain times the base station ranging unit 36 of base station 28 and the terminal ranging unit 46 of wireless station 30 engage in a ranging procedure which herein is known as a sophisticated or early-detection ranging procedure. The times of performance of the early detection ranging procedure can correspond to the times of conventional ranging operations and therefore can be an initial ranging procedure, a handover procedure, a periodic ranging procedure, or a bandwidth contention procedure. For example, an initial ranging procedure can commence upon entry of wireless station 30 into the WiMAX radio access network (RAN) 20 (e.g., powering up of the wireless station 30).

In contrast to previous practice (depicted by Fig. 3) in which the base station does not discover whether a particular wireless terminal is a legacy wireless terminal or enhanced wireless terminal until after completion of the ranging procedure, in the early-detection ranging procedure the base station discovers enhanced capabilities of the wireless terminal prior to completion of the ranging procedure, much in the manner as depicted by Fig. 4. To this end, the base station ranging unit 36 is shown in Fig. 5 as an early detection ranging unit (e.g., a ranging unit with early detection/identification of an enhanced capability terminal), and the terminal ranging unit 46 is shown in Fig. 5 as a terminal ranging unit that facilitates early detection of enhanced capability. Execution of the early detection ranging procedure enables the base station to discover the enhanced capabilities of the wireless station during, not after completion of, the early detection ranging procedure. As a result of implementation of the early detection ranging procedure, either during or upon conclusion of the early detection ranging procedure the base station and a capability-enhanced wireless terminal have the advantage of being able to engage in further communications with essentially immediate benefit of the enhanced capabilities of the wireless terminal. Those enhanced capabilities can include, for example: a capability of receiving more complex MIMO signals; a capability of receiving a different modulation; a capability of receiving the downlink (DL) signal in a portion of the time-frequency grid where legacy wireless terminals cannot receive the signal; a capability of transmitting in a different portion of the time frequency grid than legacy terminals; and/or a capability of using a more efficient transmit signal

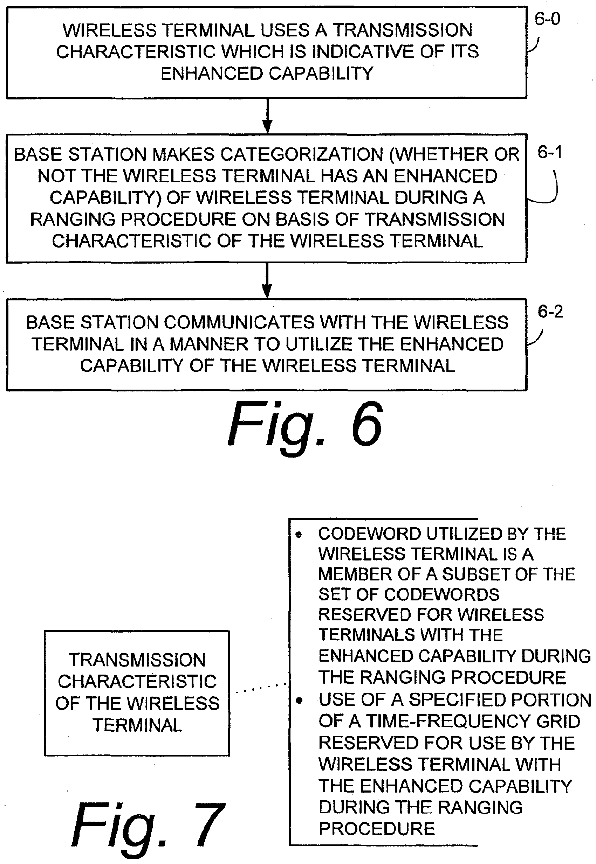

Fig. 6 shows example, representative, non-limiting acts or steps performed in conjunction with a method of the technology disclosed herein, and in particular certain aspects of a generic version of the early detection ranging procedure depicted by Fig. 4. It will be appreciated that the generic early detection ranging acts illustrated by Fig. 6 occur in the context of an overall ranging procedure of the type illustrated by and previously described (by way of non-limiting example) in conjunction with Fig. 2. Although the ranging procedure described in Fig. 2 is of an initial ranging procedure, it will be understood that comparable acts can be performed for other types of ranging procedures (such as a handover procedure, a periodic ranging procedure, and/or a bandwidth contention procedure) and that the acts of Fig. 6 can be formed in the context of the acts of those other ranging procedures as well.

Act 6-0 comprises the wireless terminal selecting and using a transmission characteristic which is indicative of its enhanced capability. As explained subsequently, the "transmission characteristic of the wireless terminal" means any radio resource that can be employed by the wireless terminal as a predetermined or prearranged an indication that the wireless terminal has enhanced capability. Examples of suitable transmission characteristics are provided below.

Act 6-1 of the early detection ranging procedure of Fig. 6 comprises the base station 28 making a categorization of the wireless terminal during the ranging procedure. The categorization concerns whether or not the wireless terminal 30 has an enhanced capability. In a generic sense, the categorization is made by base station 28 on a basis of the transmission characteristic of the wireless terminal selected and utilized in act 6-0.

Act 6-2 of the early detection initial ranging procedure of Fig. 6 comprises the base station 28 communicating with the wireless terminal in a manner to utilize the enhanced capability of the wireless terminal. The communication of act 6-2 which utilizes the enhanced capability of the wireless terminal can occur either during the ranging procedure itself or subsequently, e.g., upon conclusion of the ranging procedure or after a connection has been established between the wireless station 30 and the base station 28.

An example of the communication of act 6-2 comprises the base station 28 utilizing the enhanced capability of the wireless terminal for further communication to the wireless terminal during the ranging procedure. For example, the base station may send an allocation to the wireless terminal in a portion of the time-frequency grid that only enhanced terminals are capable of receiving, and/or it may send an allocation that only an enhanced terminal is capable of receiving, and/or it may send an allocation that only an enhanced terminal is capable of utilizing to transmit.

Thus, as a result of implementation of the early detection ranging procedure, either during or upon conclusion of the early detection ranging procedure the base station and a capability-enhanced wireless terminal have the advantage of being able to engage in further communications with essentially immediate benefit of the enhanced capabilities of the wireless terminal. Those enhanced capabilities can include, for example: a capability of receiving more complex MIMO signals; a capability of receiving a different modulation; a capability of receiving the downlink (DL) signal in a portion of the time-frequency grid where legacy wireless terminals, cannot receive the signal; a capability of transmitting in a different portion of the time frequency grid than legacy terminals; and/or a capability of using a more efficient transmit signal.

Of course, if it were determined as act 6-1 that the particular wireless station 30 which is involved in the ranging procedure with the base station 28 does not have the enhanced capability(ies), then subsequent communications after the ranging procedure are performed in a nominal (e.g. non-enhanced) manner as it is realized during the early detection ranging procedure that the wireless terminal is a legacy terminal.

As stated above, act 6-1 involves the base station making a categorization of the wireless station 30 on a basis of a transmission characteristic of the wireless terminal. As indicated above, the "transmission characteristic of the wireless terminal" means any radio resource that can be employed by the wireless terminal as a predetermined or pre-arranged an indication that the wireless terminal has enhanced capability. To this end, Fig. 7 is a diagrammatic view showing two non-limiting examples of various implementations of transmission characteristics that can be utilized in conjunction with the method of Fig. 6.

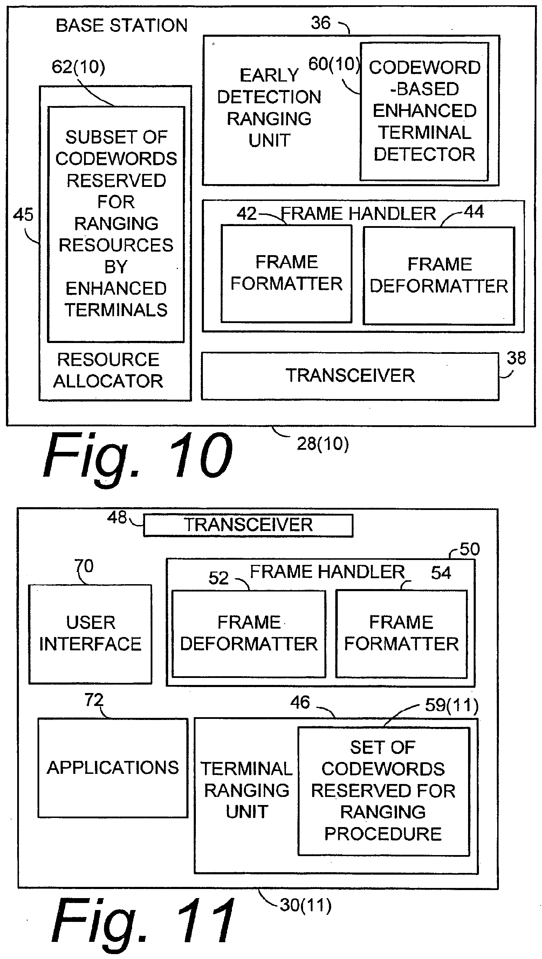

In one example mode illustrated in Fig. 7, a set of codewords are allocated for use during the ranging procedure. As used herein, the term "codeword" encompasses spreading codes of the type utilized in Code Division Multiple Access (CDMA). In this mode the transmission characteristic comprises a codeword utilized by the wireless terminal being a member of a subset of the set of codewords, the subset being reserved for use during the ranging procedure by wireless terminals with the enhanced capability. As a variation or this mode, the base station can broadcast an indication of the subset of codewords which is usable by the wireless terminal with the enhanced capability for the ranging procedure. This one example mode of Fig. 7 is further elaborated with respect to the embodiment depicted by Fig. 10 and Fig. 11.

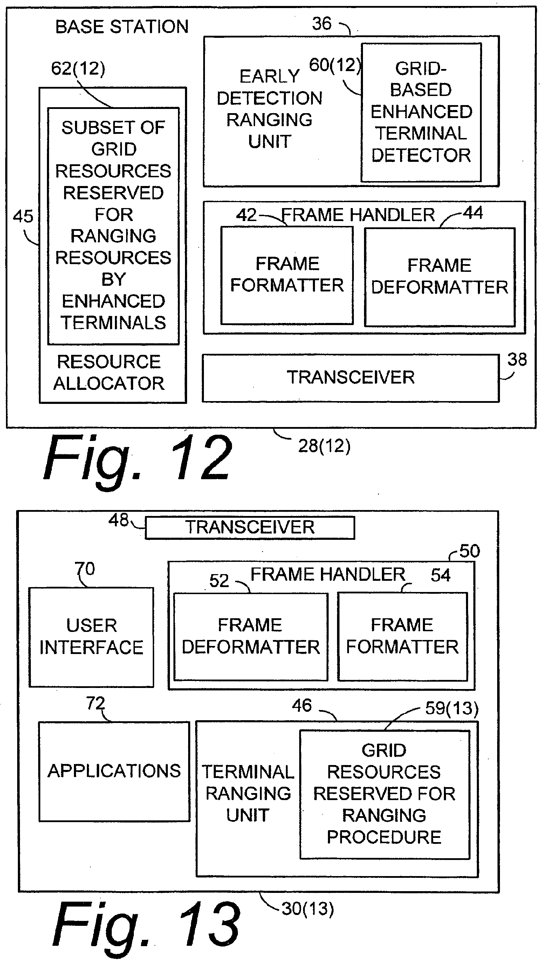

In another example mode illustrated in Fig. 7, the transmission characteristic comprises utilization of a specified portion of a time-frequency grid reserved for use by the wireless terminal with the enhanced capability during the ranging procedure. In a variation of this example mode, the base station allocates a specified portion of the time-frequency grid as being usable during the ranging procedure by the wireless terminal with the enhanced capability. For example, the base station can broadcast an indication of the specified portion of a time-frequency grid which is usable by the wireless terminal with the enhanced capability for the ranging procedure. The transmission characteristic then comprises utilization of the specified portion of the time-frequency grid by the wireless terminal with the enhanced capability. This further example mode of Fig. 7 is elaborated with respect to the embodiment depicted by Fig. 12 and Fig. 13.

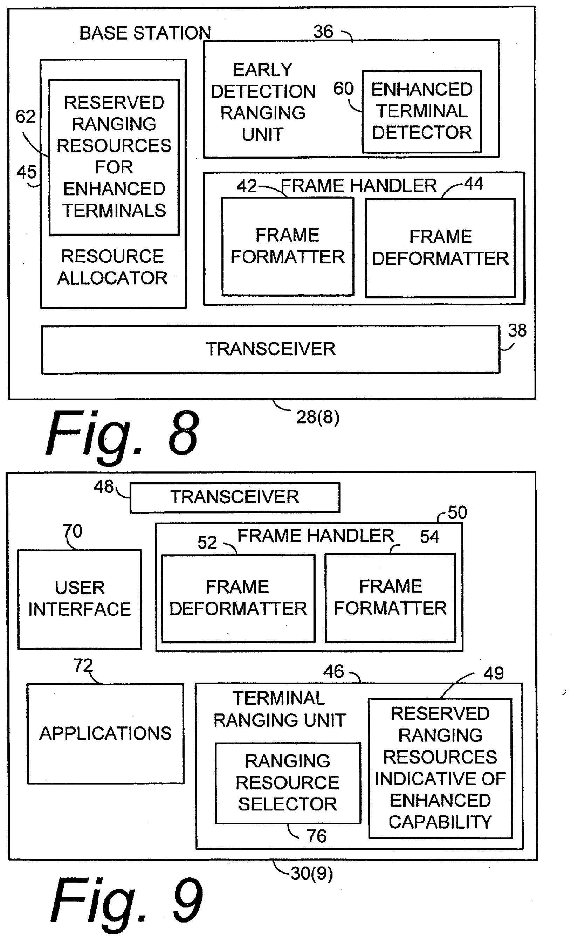

Fig. 8 shows more details of an example generic base station node, e.g., base station 28(8). As in the case of Fig. 5, base station 28(8) is configured for early identification of enhanced capabilities of a wireless terminal during a ranging procedure. Fig. 8 shows base station 28(8) as including, in addition to base station ranging unit 36 and transceiver 38, a base station frame handler 40 and resource allocator 45.

The frame handler 40 of base station 28(8) is involved in processing frame(s) F which are communicated between base station 28(8) and a wireless terminal such as wireless station 30(8) of Fig. 9. Since in this technology the frame(s) have both downlink (DL) portions or bursts and uplink (UL) portions or bursts, the frame handler 40 of base station 28(8) in turn comprises frame formatter 42 (which facilitates preparation of the downlink (DL) bursts prior to transmission by transceiver 38) and frame deformatter 44 (which facilitates processing of the uplink (UL) bursts as received by transceiver 38 from wireless terminal (WT) 30).

For sake of simplicity, Fig. 8 does not show other well-known functionalities and/or units of base station 28(8), such as (by way of non-limiting example) interfaces to other nodes of the radio access network (RAN); queues through which data is collected or assembled preparatory to inclusion in the downlink (DL) bursts configured by frame formatter 42; generators or processors for preparing signaling information for inclusion in the downlink (DL) bursts configured by frame formatter 42; queues into which data obtained from uplink (UL) bursts are stored after processed by deformatter 44; units of base station 28(8) which utilize the data and/or signaling included in uplink (UL) bursts; or node processors or the like which supervise or coordinate the constituent units or functionalities of base station 28(8).

Fig. 8 shows base station ranging unit 36 as comprising enhanced terminal detector 60. The enhanced terminal detector 60 is a sub unit of base station ranging unit 36 or other functionality that is configured to recognize that a transmission from a wireless station in the early detection ranging procedure has a transmission characteristic that indicates or marks the wireless station as being an enhanced capability wireless station. Fig. 8 further shows that resource allocator 45 further comprises or works in conjunction with a set of resources reserved (e.g., reserved resources 62) for use by enhanced terminals during the early detection ranging procedure. One example of reserved resources is described below with respect to the embodiment of Fig. 10 and Fig. 11; another example of reserved resources is described below with respect to the embodiment of Fig. 12 and Fig. 13.

Fig. 9 shows more details of an example generic wireless terminal configured to be identified as an enhanced capability terminal during a ranging procedure, and in particular wireless station 30(9). Fig. 9 shows, for example, that terminal ranging unit 46 further comprises resources 49 reserved for the ranging procedure, e.g., ranging resources which are reserved in order to be indicative of the enhanced capability of the wireless terminal. One example of reserved resources is described below with respect to the embodiment of Fig. 10 and Fig. 11; another example of reserved resources is described below with respect to the embodiment of Fig. 12 and Fig. 13.

In addition to its terminal ranging unit 46 and transceiver 48, the wireless station 30(9) comprises wireless terminal frame handler 50. As mentioned above, in this technology the frame(s) have both downlink (DL) portions or bursts and uplink (UL) portions or bursts. Therefore, frame handler 50 of wireless terminal 30(9) comprises frame deformatter 52 (which facilitates processing of the downlink (DL) bursts as received by transceiver 48 from base station 28) and frame formatter 54 (which facilitates preparation of the uplink (UL) bursts prior to transmission by transceiver 48 to the base station.

Other example components or functional units of wireless station 30(9) include user interface 70 and a set of executable applications 72. The user interface 70 includes one or more input/output devices such as a keypad/keyboard, display device, and such other devices as are known to be provided for wireless terminals in general. The applications 72 can include services which utilize, for example, the WiMAX technology referenced herein. Again for sake of simplicity, Fig. 9 does not show other well-known functionalities and/or units of wireless terminal 30(9).

The reserved ranging resources 49 can be a memory or logic that stores or contains one or more resources which can be utilized to indicate that the wireless terminal has enhanced capability. These reserved resources are different from the ranging resources that would be utilized by a non-enhanced or legacy terminal. To this end, at least in some example embodiments terminal ranging unit 46 of the wireless terminal of Fig. 9 further includes range resource selector 76. The range resource selector 76 includes logic to enable the wireless terminal, which recognizes or otherwise knows that it has enhanced capability, to use one of the reserved ranging resources rather than an ordinary resource that would be utilized for example by a legacy terminal in a ranging operation.

The elements, units, or functionalities described with respect to any embodiment of a base station node or a wireless terminal, including but not limited to the base station ranging unit 36 and the terminal ranging unit 46, can be realized by one or more processors or controllers as those terms are herein expansively explained. Nor are either of such "units" not limited to a single component but instead the functions can be, e.g., distributed among several components, chips, processors, structures, or the like.

Fig. 10 and Fig. 11 show embodiments of a base station 28(10) and a wireless station 30(11) respectively in which a set of codewords are allocated for use during the ranging procedure. In example embodiment of Fig. 10, the resource allocator 45 has supervision of, e.g., a set of codewords utilized in the communications between base station 28(10) and wireless terminals. In this example embodiment the reserved resources 62(10) comprises a subset of the codewords, the subset being reserved for use in the early detection ranging procedure for wireless terminals which have the enhanced capability. In example embodiment of Fig. 10, the enhanced terminal detector 60(10) is arranged to detect when a wireless terminal participating in the ranging procedure is utilizing one of the codewords that belong to the reserved set 62. Similarly, the terminal ranging unit 46 of wireless station 30(11) has access to a subset 59(11) of codewords which are reserved for use by enhanced capability wireless terminals during the early detection ranging procedure. The subset 59(11) of reserved codewords as maintained by wireless station 30(11) can be coextensive with or comprise a subset of the subset 62(10) of reserved codewords which are maintained by base station 28(10). The subsets 59(11) and 62(10) can be maintained in appropriate memories (e.g., non-volatile memories) of their respective nodes. The subset 59(11) that is to be used can typically be identified by the base station in broadcast messages that are received by the wireless terminal, and then stored in the appropriate memory.

Fig. 12 shows an example base station node 28(12) configured for early identification of enhanced capabilities of a wireless terminal (such as wireless terminal 30(13)) by detecting use of a reserved portion of a time-frequency grid during a ranging procedure. Fig. 13 shows the example wireless terminal 30(13) configured to be identified as an enhanced capability terminal on the basis of use of a reserved portion of a time-frequency grid during a ranging procedure.

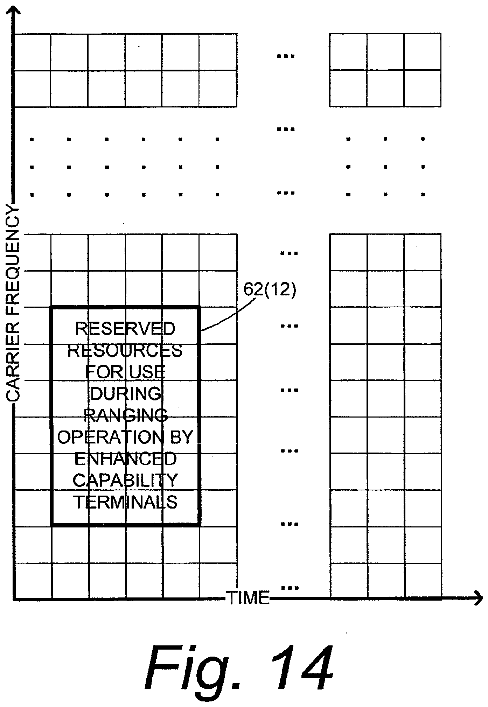

Fig. 14 shows an example time-frequency grid which can be utilized with a WiMAX type of network. As depicted in Fig. 14 the grid has time (slots) arranged along its horizontal axis and carrier frequencies arranged along its vertical axis. In the embodiment of Fig. 12 and Fig. 13 the transmission characteristic comprises utilization of a specified portion of a time-frequency grid reserved for use by the wireless terminal which has the enhanced capability during the ranging procedure. In example embodiment of Fig. 12, the resource allocator 45 has supervision of, e.g., a set of carrier frequencies and time slots comprising a time-frequency grid. In this example embodiment the reserved resources 62(12) [shown both in Fig. 12 and Fig. 14] comprises a subset of the carrier frequency and slot positions in the grid, the subset being reserved for use in the early detection ranging procedure for wireless terminals which have the enhanced capability. Similarly, the terminal ranging unit 46 of wireless station 30(13) has access to a subset 59(13) of carrier frequency and slot positions in the same grid, the subset being reserved for use by the enhanced capability wireless terminals. The subset 59(13) of reserved grid positions as maintained by wireless station 30(13) can be coextensive with or comprise a subset of the subset 62(12) of reserved grid positions which are maintained by base station 28(13). The locations of the grid positions or portions which comprise subsets 59(13) and 62(12) can be maintained in appropriate memories (e.g., non-volatile memories) of their respective nodes.

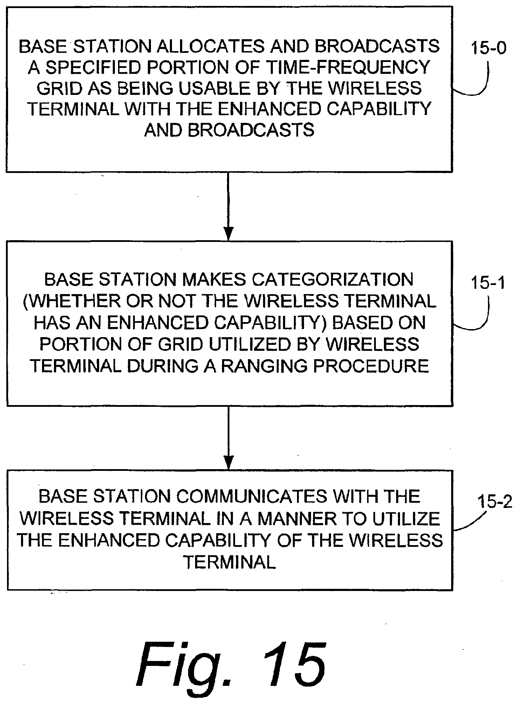

Thus, in one variation of this example mode illustrated in Fig. 15, as act 15-0 the base station allocates (via reserved resources 62(12) a reserved portion of the time-frequency grid as being usable by the wireless terminal with the enhanced capability and broadcasts over the air interface an indication of that reserved portion of the time-frequency grid which is usable by the wireless terminal with the enhanced capability for the ranging procedure. The broadcast of the indication of the reserved portion of a time-frequency grid which is usable by the wireless terminal with the enhanced capability for the ranging procedure can occur in a new information element (IE) of an existing message (such as a UCD message) or can be included in a new message. The wireless terminals having the enhanced capability will detect the broadcast and know to use the specified reserved portion of the time-frequency grid for their ranging procedure transmissions. The remaining acts of the method of Fig. 15 have similar suffixed numbers as the acts of Fig. 5 and are understood accordingly. For example, for act 15-1 the base station makes it categorization (whether the wireless terminal is or is not an enhanced capability wireless terminal) based on the portion of the grid that the wireless terminal utilizes for transmissions during the ranging procedure. If the wireless terminal uses the specified reserved portion for transmissions during the ranging procedure, the base station immediately (e.g., during the ranging procedure) realizes that the wireless terminal is an enhanced capability wireless terminal. If the transmissions of the wireless terminal during the ranging procedure do not use the specified reserved portion of the grid, the base station immediately recognizes the wireless terminal as a legacy terminal.

In variations of the modes described above the base station can broadcast, e.g., via a broadcast message, an indication of a subset of transmission resources that are to be utilized by the enhanced wireless terminal and thus provide an early identification of the wireless terminal as an enhanced capability terminal. The base station identifies the subset of transmission resources that terminals with enhanced capacity may use in order to indicate their capability. For example, out of a set of one hundred codewords, the base station may indicate that codewords 1-10 are to be used by legacy terminals for initial ranging, and codewords 10-20 are to be used by terminals with enhanced capability for initial ranging. The base station may similarly identify other subsets of the available codewords for other ranging purposes. In another example, the base station may indicate that certain subchannels in a certain frame, identified by a frame number, are used for initial ranging by legacy terminals, whereas certain subchannels in a different frame are used for initial ranging by terminals with enhanced capability, thus identifying the portion of the time-frequency grid that is to be used by terminals with enhanced capability.

The foregoing embodiments illustrate the base station can advantageously know the enhanced capability (e.g., 802.16m capability) of a wireless terminal during the early detection initial ranging procedure so that the base station can use these advanced features even for the initial allocations and at a time when the base station does not know the identity of wireless terminal.

As explained above, different sets of transmission resources (e.g., ranging codes or time-frequency grid position resources) are used for legacy wireless terminals on the one hand and for new wireless terminals or new subscriber stations (SSs) on the other hand. This delineation or reservation of resources for the enhanced capability wireless terminals helps the base station identify the whether the wireless terminal has the enhanced capability (e.g., 802.16m capabilities). The transmission resource/characteristic can be a transmission resource such as codewords (with reserved codewords for the enhanced capability wireless terminals) or, alternatively, a new allocation in time and frequency grid which is made for new or enhanced wireless terminals or subscriber stations for use in sending a ranging signal. This allocation is designed in such a way that it is not understood by a legacy wireless terminal. Alternatively, this reserved allocation is in a location where the legacy MS cannot transmit. Then, the location of the received ranging signals helps the base station identify the wireless terminal's 802.16m capability.

In a first non-limiting example embodiment which is illustrated by Fig. 10 and Fig. 11, a new subscriber station (SS) or wireless terminal is assigned a different set of CDMA codes for initial ranging, periodic ranging, and bandwidth request as than is assigned to a legacy wireless terminal. On receipt of the CDMA code from the wireless terminal, the BS can immediately determine the capability of the wireless terminal (whether enhanced capability or not), and can use the DL transmission mechanisms accordingly to allocate resources to the wireless terminal.

In a second non-limiting example embodiment which is illustrated by Fig. 12 and Fig. 13, the base station 28 identifies a different portion of the time-frequency grid where a new subscriber station (SS) sends initial ranging, periodic ranging, and bandwidth request messages. In the method shown in Fig. 15, a new information element (IE) is used to send this allocation so that it is not understood by legacy mobile station (MS). On receipt of a CDMA code in this region, the base station can immediately identify the capability of the MS.

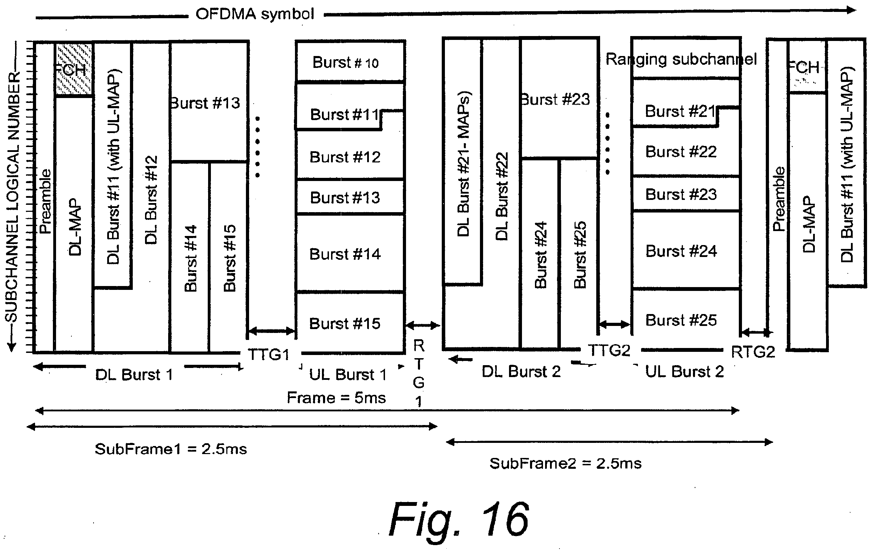

An example of an enhanced frame as mentioned above is illustrated in Fig. 16 and is described in United States Patent Application 12/138,000, entitled "TELECOMMUNICATIONS FRAME STRUCTURE ACCOMMODATING DIFFERING FORMATS", filed June 12, 2008. In the illustrated example of Fig. 16, which is consistent with and particularly but not exclusively suited for IEEE standard 802.16m, the five ms frame of Fig. 16 is divided into two 2.5 ms subframes for the purposes of illustration. Each subframe has a downlink (DL) portion and an uplink (UL) portion, e.g., downlink (DL) Burst 1 and uplink (UL) Burst 1 in subframe 1 and downlink (DL) Burst 2 and uplink (UL) Burst 2 in subframe 2. However, the two subframes need not necessarily be equal. The lengths of the subframes could be configured so that one subframe is longer than the other, though the lengths of both subframes, along with the transmit and receive transition gaps added, sum to 5 ms. The bursts of enhanced frame F are separated by gaps to allow for switching the transceiver from transmit to receive. For example, Fig. 16 illustrates a first transmit transition gap (TTG1) between downlink (DL) Burst 1 of subframe 1 and uplink (UL) Burst 1 of subframe 1; a first receive transition gap (RTG1) between uplink (UL) Burst 1 of subframe 1 and downlink (DL) burst 2 of subframe 2; a second transmit transition gap (TTG2) between downlink (DL) Burst 2 of subframe 2 and uplink (UL) Burst 2 of subframe 2; and a second receive transition gap (RTG2) between uplink (UL) Burst 2 of subframe 2 and a downlink (DL) burst 1 of the first subframe of a next frame. The presence of the TTGs helps prevent uplink (UL) interference from downlink (DL) transmissions from remote base stations. In an example embodiment, the base station 28 can identify ranging resources for a new wireless terminal on uplink (UL) subframe 1, while ranging resources for a legacy wt are assigned on (UL)subframe 2.

Although the description above contains many specificities, these should not be construed as limiting the scope of the invention but as merely providing illustrations of some of the presently preferred embodiments of this invention. Therefore, it will be appreciated that the scope of the present invention fully encompasses other embodiments which may become obvious to those skilled in the art, and that the scope of the present invention is accordingly to not be limited. In the appended claims reference to an element in the singular is not intended to mean "one and only one" unless explicitly so stated, but rather "one or more." Moreover, it is not necessary for a device or method to address each and every problem sought to be solved by the present invention. Furthermore, no element, component, or method step in the present disclosure is intended to be dedicated to the public regardless of whether the element, component, or method step is explicitly recited in the claims.

## Claims

1. A method of operating a communications network (10) comprising a base station (28) and a wireless terminal (30) which communicates over an air interface (32) with the base station (28), the method comprising the base station (28) making a categorization of the wireless terminal (30) during a ranging procedure, the categorization being whether or not the wireless terminal (30) has an enhanced capability permitting the wireless terminal to use a 802.16m-specific signal and/or procedure, the categorization being made on a basis of a transmission characteristic of the wireless terminal (30), wherein the transmission characteristic comprises utilization of a specified portion of a time-frequency grid reserved for use by the wireless terminal (30) with the enhanced capability during the ranging procedure; the base station (28) communicating with the wireless terminal (30) in a manner to utilize the enhanced capability of the wireless terminal (30).

2. The method of claim 1, wherein the base station (28) utilizes the enhanced capability of the wireless terminal (30) for further communication to the wireless terminal (30) during the ranging procedure.

3. The method of claim 2, wherein the base station (28) utilizes the enhanced capability of the wireless terminal (30) for downloading parameters to the wireless terminal (30) during the ranging procedure.

4. The method of claim 1, wherein the base station (28) allocates a specified portion of a time-frequency grid as being usable by the wireless terminal (30) with the enhanced capability for the ranging procedure, and wherein the transmission characteristic comprises utilization of the specified portion of the time-frequency grid by the wireless terminal (30) with the enhanced capability.

5. The method of claim 4, wherein the base station (28) broadcasts an indication of the specified portion of a time-frequency grid which is usable by the wireless terminal (30) with the enhanced capability for the ranging procedure.

6. The method of claim 1, wherein the ranging procedure is one of an initial ranging procedure, a handover procedure, a periodic ranging procedure, and a bandwidth contention procedure.

7. A base station (28) comprising:
a transceiver (38) configured to communicate over an air interface (32) with a wireless terminal (30); and
a ranging unit; wherein the ranging unit (36) is configured to making a categorization of the wireless terminal (30) during a ranging procedure, the categorization being whether or not the wireless terminal (30) has an enhanced capability permitting the wireless terminal to use a 802.16m-specific signal and/or procedure, the categorization being made on a basis of a transmission characteristic of the wireless terminal (30), and
wherein the transmission characteristic comprises utilization of a specified portion of a time-frequency grid reserved for use by the wireless terminal (30) with the enhanced capability during the ranging procedure.

8. The base station of claim 7, wherein the ranging unit (36) is configured to utilize the enhanced capability of the wireless terminal (30) for further communication to the wireless terminal (30) during the ranging procedure.

9. The base station of claim 8, wherein the ranging unit (36) is configured to utilize the enhanced capability of the wireless terminal (30) for downloading parameters to the wireless terminal (30) during the ranging procedure.

10. The base station of claim 7, wherein the base station (28) is configured to allocate a specified portion of a time-frequency grid as being usable by the wireless terminal (30) with the enhanced capability, and wherein the transmission characteristic comprises utilization of the specified portion of the time-frequency grid by the wireless terminal (30) with the enhanced capability.

11. The base station of claim 10, wherein the base station (28) is configured to broadcast an indication of the specified portion of a time-frequency grid which is usable by the wireless terminal (30) with the enhanced capability for the ranging procedure.

12. The base station of claim 7, wherein the ranging procedure is one of an initial ranging procedure, a handover procedure, a periodic ranging procedure, and a bandwidth contention procedure.

13. A wireless terminal (30) comprising:
a transceiver (48) configured to communicate over an air interface (32) with a base station (28); and
a terminal ranging unit (46) configured to transmit a signal with a transmission characteristic in a ranging procedure, the transmission characteristic serving to indicate that the wireless terminal (30) has an enhanced capability permitting the wireless terminal to use a 802.16m-specific signal and/or procedure, and
wherein the transmission characteristic comprises utilization of a specified portion of a time-frequency grid reserved for use by the wireless terminal (30) with the enhanced capability during the ranging procedure.

14. A method of operating a wireless terminal (30), the method comprising transmitting, in a ranging procedure performed between the base station (28) and the wireless terminal (30), a signal with a transmission characteristic which indicates that the wireless terminal (30) has an enhanced capability permitting the wireless terminal to use a 802.16m-specific signal and/or procedure; wherein the transmission characteristic comprises utilization of a specified portion of a time-frequency grid reserved for use by the wireless terminal (30) with the enhanced capability during the ranging procedure.

## Patentansprüche

1. Verfahren zum Betreiben eines Kommunikationsnetzwerks (10), das eine Basisstation (28) und ein drahtloses Endgerät (30), das über eine Luftschnittstelle (32) mit der Basisstation (28) kommuniziert, umfasst, wobei das Verfahren umfasst:
durch die Basisstation (28) erfolgendes Vornehmen einer Kategorisierung des drahtlosen Endgeräts (30) während einer Ortungsprozedur, wobei die Kategorisierung danach erfolgt, ob das drahtlose Endgerät (30) eine verbesserte Fähigkeit hat oder nicht, ein Signal und/oder eine Prozedur zu verwenden, die 802.16m-spezifisch sind, wobei die Kategorisierung auf der Grundlage eines charakteristischen Übertragungsmerkmals des drahtlosen Endgeräts (30) vorgenommen wird, worin das charakteristische Übertragungsmerkmal die Nutzung eines festgelegten Abschnitts eines Zeit-Frequenz-Gitters betrifft, der für die Verwendung durch das drahtlose Endgerät (30) mit der verbesserten Fähigkeit während der Ortungsprozedur reserviert ist,
durch die Basisstation (28) erfolgendes Kommunizieren mit dem drahtlosen Endgerät (30) auf eine Weise, dass die verbesserte Fähigkeit des drahtlosen Endgeräts (30) genutzt wird.

2. Verfahren nach Anspruch 1, worin die Basisstation (28) die verbesserte Fähigkeit des drahtlosen Endgeräts (30) für weitere Kommunikation mit dem drahtlosen Endgerät (30) während der Ortungsprozedur nutzt.

3. Verfahren nach Anspruch 2, worin die Basisstation (28) die verbesserte Fähigkeit des drahtlosen Endgeräts (30) zum Herunterladen von Parametern zum drahtlosen Endgerät (30) während der Ortungsprozedur nutzt.

4. Verfahren nach Anspruch 1, worin die Basisstation (28) einen festgelegten Abschnitt eines Zeit-Frequenz-Gitters als durch das drahtlose Endgerät (30) mit der verbesserten Fähigkeit für die Ortungsprozedur verwendbar zuweist und worin das charakteristische Übertragungsmerkmal die Nutzung des festgelegten Abschnitts des Zeit-Frequenz-Gitters durch das drahtlose Endgerät (30) mit der verbesserten Fähigkeit umfasst.

5. Verfahren nach Anspruch 4, worin die Basisstation (28) einen Hinweis auf den festgelegten Abschnitt eines Zeit-Frequenz-Gitters, der durch das drahtlose Endgerät (30) mit der verbesserten Fähigkeit für die Ortungsprozedur verwendbar ist, rundsendet.

6. Verfahren nach Anspruch 1, worin die Ortungsprozedur eines von Folgendem ist: eine Anfangsortungsprozedur, eine Verbindungsübergabeprozedur, eine periodische Ortungsprozedur und eine Bandbreiten-Zugriffskonfliktprozedur.

7. Basisstation (28), umfassend:
einen Sendeempfänger (38), der dafür konfiguriert ist, über eine Luftschnittstelle (32) mit einem drahtlosen Endgerät (30) zu kommunizieren; und
eine Ortungseinheit;
worin die Ortungseinheit (36) dafür konfiguriert ist, eine Kategorisierung des drahtlosen Endgeräts (30) während einer Ortungsprozedur vorzunehmen, wobei die Kategorisierung danach erfolgt, ob das drahtlose Endgerät (30) eine verbesserte Fähigkeit hat oder nicht, ein Signal und/oder eine Prozedur zu verwenden, die 802.16m-spezifisch sind, wobei die Kategorisierung auf der Grundlage eines charakteristischen Übertragungsmerkmals des drahtlosen Endgeräts (30) vorgenommen wird, und
worin das charakteristische Übertragungsmerkmal die Nutzung eines festgelegten Abschnitts eines Zeit-Frequenz-Gitters betrifft, der für die Verwendung durch das drahtlose Endgerät (30) mit der verbesserten Fähigkeit während der Ortungsprozedur reserviert ist.

8. Basisstation nach Anspruch 7, worin die Ortungseinheit (36) dafür konfiguriert ist, die verbesserte Fähigkeit des drahtlosen Endgeräts (30) für weitere Kommunikation mit dem drahtlosen Endgerät (30) während der Ortungsprozedur zu nutzen.

9. Basisstation nach Anspruch 8, worin die Ortungseinheit (36) dafür konfiguriert ist, die verbesserte Fähigkeit des drahtlosen Endgeräts (30) zum Herunterladen von Parametern zum drahtlosen Endgerät (30) während der Ortungsprozedur zu nutzen.

10. Basisstation nach Anspruch 7, worin die Basisstation (28) dafür konfiguriert ist, einen festgelegten Abschnitt eines Zeit-Frequenz-Gitters als durch das drahtlose Endgerät (30) mit der verbesserten Fähigkeit verwendbar zuzuweisen, und worin das charakteristische Übertragungsmerkmal die Nutzung des festgelegten Abschnitts des Zeit-Frequenz-Gitters durch das drahtlose Endgerät (30) mit der verbesserten Fähigkeit umfasst.

11. Basisstation nach Anspruch 10, worin die Basisstation (28) dafür konfiguriert ist, einen Hinweis auf den festgelegten Abschnitt eines Zeit-Frequenz-Gitters, der durch das drahtlose Endgerät (30) mit der verbesserten Fähigkeit für die Ortungsprozedur verwendbar ist, rundzusenden.

12. Basisstation nach Anspruch 7, worin die Ortungsprozedur eines von Folgendem ist: eine Anfangsortungsprozedur, eine Verbindungsübergabeprozedur, eine periodische Ortungsprozedur und eine Bandbreiten-Zugriffskonfliktprozedur.

13. Drahtloses Endgerät (30), umfassend:
einen Sendeempfänger (48), der dafür konfiguriert ist, über eine Luftschnittstelle (32) mit einer Basisstation (28) zu kommunizieren; und
eine Endgerät-Ortungseinheit (46), die dafür konfiguriert ist, ein Signal mit einem charakteristischen Übertragungsmerkmal in einer Ortungsprozedur zu übertragen, wobei das charakteristische Übertragungsmerkmal dazu dient, darauf hinzuweisen, dass das drahtlose Endgerät (30) eine verbesserte Fähigkeit hat, die dem drahtlosen Endgerät gestattet, ein Signal und/oder eine Prozedur zu verwenden, die 802.16m-spezifisch sind, und
worin das charakteristische Übertragungsmerkmal die Nutzung eines festgelegten Abschnitts eines Zeit-Frequenz-Gitters betrifft, der für die Verwendung durch das drahtlose Endgerät (30) mit der verbesserten Fähigkeit während der Ortungsprozedur reserviert ist.

14. Verfahren zum Betreiben eines drahtlosen Endgeräts (30), wobei das Verfahren umfasst:
in einer Ortungsprozedur, die zwischen einer Basisstation (28) und dem drahtlosen Endgerät (30) durchgeführt wird, erfolgendes Übertragen eines Signals mit einem charakteristischen Übertragungsmerkmal, das darauf hinweist, dass das drahtlose Endgerät (30) eine verbesserte Fähigkeit hat, die dem drahtlosen Endgerät gestattet, ein Signal und/oder eine Prozedur zu verwenden, die 802.16m-spezifisch sind;
worin das charakteristische Übertragungsmerkmal die Nutzung eines festgelegten Abschnitts eines Zeit-Frequenz-Gitters betrifft, der für die Verwendung durch das drahtlose Endgerät (30) mit der verbesserten Fähigkeit während der Ortungsprozedur reserviert ist.

## Revendications

1. Procédé d'exploitation d'un réseau de communication (10) comprenant une station de base (28) et un terminal sans fil (30) qui communique sur une interface radio (32) avec la station de base (28), le procédé comprenant les étapes suivantes :
la base la station (28) effectue une catégorisation du terminal sans fil (30) au cours d'une procédure de localisation, la catégorisation consistant à déterminer si oui ou non le terminal sans fil (30) présente une capacité accrue permettant au terminal sans fil d'utiliser une procédure et/ou un signal spécifiques à la norme 802.16m, la catégorisation étant effectuée sur la base d'une caractéristique de transmission du terminal sans fil (30), où la caractéristique de transmission comprend l'utilisation d'une portion spécifiée d'une grille temps-fréquence réservée à une utilisation par le terminal sans fil (30) avec la capacité accrue au cours de la procédure de localisation ;
la station de base (28) communique avec le terminal sans fil (30) de manière à utiliser la capacité accrue du terminal sans fil (30).

2. Procédé selon la revendication 1, dans lequel la station de base (28) utilise la capacité accrue du terminal sans fil (30) pour des communications supplémentaires avec le terminal sans fil (30) au cours de la procédure de localisation.

3. Procédé selon la revendication 2, dans lequel la station de base (28) utilise la capacité accrue du terminal sans fil (30) pour télécharger des paramètres vers le terminal sans fil (30) au cours de la procédure de localisation.

4. Procédé selon la revendication 1, dans lequel la station de base (28) alloue une portion spécifiée d'une grille temps-fréquence comme étant utilisable par le terminal sans fil (30) avec la capacité accrue pour la procédure de localisation, et où la caractéristique de transmission comprend l'utilisation de la portion spécifiée de la grille temps-fréquence par le terminal sans fil (30) avec la capacité accrue.

5. Procédé selon la revendication 4, dans lequel la station de base (28) diffuse une indication de la portion spécifiée d'une grille temps-fréquence qui est utilisable par le terminal sans fil (30) avec la capacité accrue pour la procédure de localisation.

6. Procédé selon la revendication 1, dans lequel la procédure de localisation est une procédure parmi une procédure de localisation initiale, une procédure de transfert intercellulaire, une procédure de localisation périodique et une procédure de contention de bande passante.

7. Station de base (28) comprenant :
un émetteur-récepteur (38) configuré pour communiquer sur une interface radio (32) avec un terminal sans fil (30) ; et
une unité de localisation ;
où l'unité de localisation (36) est configurée pour effectuer une catégorisation du terminal sans fil (30) au cours d'une procédure de localisation, la catégorisation consistant à déterminer si oui ou non le terminal sans fil (30) présente une capacité accrue permettant au terminal sans fil d'utiliser une procédure et/ou un signal spécifiques à la norme 802.16m, la catégorisation étant effectuée sur la base d'une caractéristique de transmission du terminal sans fil (30), et
où la caractéristique de transmission comprend l'utilisation d'une portion spécifiée d'une grille temps-fréquence réservée à une utilisation par le terminal sans fil (30) avec la capacité accrue au cours de la procédure de localisation.

8. Station de base selon la revendication 7, dans laquelle l'unité de localisation (36) est configurée pour utiliser la capacité accrue du terminal sans fil (30) pour des communications supplémentaires avec le terminal sans fil (30) au cours de la procédure de localisation.

9. Station de base selon la revendication 8, dans laquelle l'unité de localisation (36) est configurée pour utiliser la capacité accrue du terminal sans fil (30) pour télécharger des paramètres vers le terminal sans fil (30) au cours de la procédure de localisation.

10. Station de base selon la revendication 7, dans laquelle la station de base (28) est configurée pour allouer une portion spécifiée d'une grille temps-fréquence comme étant utilisable par le terminal sans fil (30) avec la capacité accrue, et où la caractéristique de transmission comprend l'utilisation de la portion spécifiée de la grille temps-fréquence par le terminal sans fil (30) avec la capacité accrue.

11. Station de base selon la revendication 10, dans laquelle la station de base (28) est configurée pour diffuser une indication de la portion spécifiée d'une grille temps-fréquence qui est utilisable par le terminal sans fil (30) avec la capacité accrue pour la procédure de localisation.

12. Station de base selon la revendication 7, dans laquelle la procédure de localisation est une procédure parmi une procédure de localisation initiale, une procédure de transfert intercellulaire, une procédure de localisation périodique et une procédure de contention de bande passante.

13. Terminal sans fil (30) comprenant :
un émetteur-récepteur (48) configuré pour communiquer sur une interface radio (32) avec une station de base (28) ; et
une unité de localisation de terminal (46) configurée pour transmettre un signal avec une caractéristique de transmission dans une procédure de localisation, la caractéristique de transmission servant à indiquer que le terminal sans fil (30) présente une capacité accrue permettant au terminal sans fil d'utiliser une procédure et/ou un signal spécifiques à la norme 802.16m, et
où la caractéristique de transmission comprend l'utilisation d'une portion spécifiée d'une grille temps-fréquence réservée à une utilisation par le terminal sans fil (30) avec la capacité accrue au cours de la procédure de localisation.

14. Procédé d'exploitation d'un terminal sans fil (30), le procédé comprenant les étapes suivantes :
transmettre, dans une procédure de localisation exécutée entre la station de base (28) et le terminal sans fil (30), un signal avec une caractéristique de transmission qui indique que le terminal sans fil (30) présente une capacité accrue permettant au terminal sans fil d'utiliser une procédure et/ou un signal spécifiques à la norme 802.16m ; où la caractéristique de transmission comprend l'utilisation d'une portion spécifiée d'une grille temps-fréquence réservée à une utilisation par le terminal sans fil (30) avec la capacité accrue au cours de la procédure de localisation.
